# EUROPÄISCHE PATENTSCHRIFT

(11) **EP 3 484 706 B1**
(45) Veröffentlichungstag und Bekanntmachung des Hinweises auf die Patenterteilung: **06.04.2022**
(21) Anmeldenummer: 17727931.2
(22) Anmeldetag: 09.06.2017
(51) Int. Cl.: B32B 17/10

(54) **TRANSPARENTE BRANDSCHUTZVERGLASUNG MIT EINBRUCHHEMMENDEN UND ANTIPANIK-EIGENSCHAFTEN**
TRANSPARENT FIRE-RESISTANT GLAZING COMPRISING BURGLARY PREVENTION AND ANTI PANIC PROPERTIES
VITRAGE IGNIFUGE TRANSPARENT PRESENTANT DES CARACTERISTIQUES ANTI-PANIQUE ET ANTI-EFFRACTION

(30) Priorität: 18.07.2016 EP 16179927
(43) Veröffentlichungstag der Anmeldung: 22.05.2019
(73) Patentinhaber: SAINT-GOBAIN GLASS FRANCE, 92400 Courbevoie (FR)
(72) Erfinder: HERMENS, Ulrich, 52078 Aachen (DE); KOCHS, Rolf, 52062 Aachen (DE); NEANDER, Marcus, 52249 Eschweiler (DE); KOWALKE, Olaf, 52353 Düren-Arnoldsweiler (DE)
(74) Vertreter: Gebauer, Dieter Edmund
(86) Internationale Anmeldenummer: PCT/EP2017/064109
(87) Internationale Veröffentlichungsnummer: WO 2018/015066

(56) Entgegenhaltungen:
- WO-A1-2005/115746
- DE-A1- 3 231 975
- DE-B1- 2 507 244
- US-A- 5 496 640
- US-A1- 2011 135 940

## Beschreibung

### Gebiet der Erfindung

Die vorliegende Erfindung betrifft eine transparente Brandschutzverglasung mit einbruchhemmenden und Antipanik-Eigenschaften, ein Verfahren zu ihrer Herstellung und ihre Verwendung.

### Stand der Technik

Herkömmliche Fenstergläser sind als Feuerschutzbarrieren ungeeignet, weil sie bei jeder stärkeren thermischen Belastung zerplatzen. Das Feuer und die entstehende Wärmestrahlung können sich ungehemmt ausbreiten. Der Grund dafür liegt in ihrem relativ hohen thermischen Ausdehnungskoeffizienten und ihrer relativ geringen Zugfestigkeit. Um das Bersten von Glasscheiben durch Feuer für längere Zeit zu verhindern, werden daher sogar Drahtgeflechte in 6 bis 8 mm dicke Scheiben eingebracht, die auch nach dem Glasbruch das Gefüge zusammenhalten. Deren Einsatzmöglichkeit ist jedoch aufgrund der verminderten Lichtdurchlässigkeit auf Trennwände, Türen und Oberlichter beschränkt. Mittlerweile wurde eine Reihe von drahtlosen Brandschutzgläsern entwickelt, die auch für den Fensterbau geeignet sind.

Unter dem Begriff "Brandschutzverglasungen" werden im allgemeinen Bauteile verstanden, die aus einem oder mehreren lichtdurchlässigen Systemen bestehen, die mit Halterungen und Dichtungen in einen Rahmen eingebaut sind. Hinsichtlich ihrer Feuerwiderstandsklassen unterscheidet man EI- und E-Verglasungen. Derartige Verglasungen werden zusätzlich durch die Angabe ihrer Feuerwiderstandsdauer in Minuten charakterisiert (z.B. EI 30, EI 90, E 30, EI 120). E-Verglasungen verhindern für die entsprechende Zeit nur die Ausbreitung von Feuer und Rauch. El-Verglasungen müssen zusätzlich den Durchtritt der Wärmestrahlung verhindern.

Als El-Verglasungen sind heute kombinierte Systeme von Brandschutzscheiben und Füllschichten zwischen den Scheiben üblich. Bei dieser Mehrscheibenverglasung schäumen die Füllschichten im Brandfall auf und wirkt dadurch als Hitzeschild. Das Aufschäumen wird auch als Intumeszenz bezeichnet. Diese Füllschichten können sowohl organischer als auch anorganischer Natur sein oder eine Kombination aus beidem darstellen. Ihre Aufgabe ist die Verzögerung des Wärmedurchgangs zum einen durch endotherme Prozesse, wie z.B. Verdampfung in den Füllschichten, zum anderen die Bildung eines isolierenden Rückstandes, wie z.B. Schaum, der gut am Glas haften sollte.

Obwohl diese Brandschutzverglasungen das Problem der Ausbreitung von Feuer lösen können, haben sie keine angriffshemmenden oder durchbruchhemmenden Eigenschaften, weswegen sie auch nicht einbruchhemmend sind.

Aus der deutschen Patentanmeldung DE 10 2010 037 966 A1 ist eine monolithische, angriffhemmende und feuerwiderstandsfähige Verglasung bekannt. Diese Verglasung weist mindestens eine intumeszierende Brandschutzschicht auf, wobei auf den gegenüberliegenden Seitenflächen der Brandschutzverglasung mittelbar oder unmittelbar jeweils mindestens eine Kunststoffschicht (Kunststoffscheibe) angeordnet ist. Auf den der Brandschutzverglasung abgewandten Seiten der Kunststoffschicht ist jeweils mindestens eine Glas- oder Glaskeramikscheibe angeordnet. Erreicht der Kunststoffanteil vor oder hinter dem Brandschutzglas eine bestimmte Masse, wirkt sich diese zwar positiv auf die Einbruchshemmung, aber negativ auf das Brandverhalten aus.

Brandschutzverglasungen sollen häufig in sogenannten Anti-Panik-Verglasungen eingesetzt werden. Darunter werden Glastüren verstanden, die sich auch im abgeschlossenen Zustand von einer Richtung aus, typischerweise ausgehend vom Innenraum des betreffenden Gebäudes, öffnen lassen, beispielsweise durch einen Öffnungshebel, so dass sie flüchtenden Menschenmassen den Weg aus dem Innenraum heraus eröffnen. An eine solche Verglasung sind besondere durchbruchshemmende Eigenschaften zu stellen, weil der Öffnungshebel durch Erzeugung eines relativ kleinen Lochs von außen zugänglich wird, wodurch die Tür auch von außen geöffnet werden kann.

Die WO 2005/115746 A1 offenbart komplexe Brandschutzverglasungen, die aus miteinander verbundenen Brandschutzeinheiten aufgebaut sein können, welche jeweils aus mehreren, über intumineszierende Schichten miteinander verbundenen Glasscheiben bestehen. Die Brandschutzverglasungen weisen aber keine Kunststoffscheiben zur Erhöhung der Durchbruchshemmung auf. Ihre einbruchshemmenden Eigenschaften sind daher gering.

Eine ähnliche Brandschutzverglasung ist aus der DE 3231975 A1 bekannt. Auch hier sind keine Kunststoffscheiben vorgesehen, um einbruchshemmende Eigenschaften zu erreichen.

Die US 2011/0135940 A1 offenbart eine Brandschutzverglasung mit durchbruchshemmenden Eigenschaften. Die durchbruchshemmenden Eigenschaften werden durch verstärkte Silikonfilme mit einer Dicke bis zu 100 µm erreicht.

Es war die Aufgabe der vorliegenden Erfindung, eine transparente Brandschutzverglasung mit besonders guten einbruchhemmenden Eigenschaften vorzuschlagen, die die Nachteile des Standes der Technik überwindet und auch in Anti-Panik-Verglasungen eingesetzt werden kann. Insbesondere sollte die negative Auswirkung dicker Kunststoffplatten auf den Brandschutz vermieden werden. Nicht zuletzt sollten die neuen transparenten, einbruchhemmenden Brandschutzverglasungen mit Antipanik-Eigenschaften rasch, präzise und wenn überhaupt nur mit einem sehr geringen Ausschuss mithilfe herkömmlicher Methoden herstellbar sein, so dass keine besonderen Verfahrensmaßnahmen ergriffen werden mussten.

Diese und weitere Aufgaben werden nach dem Vorschlag der Erfindung durch die transparente einbruchhemmende Brandschutzverglasung mit Antipanik-Eigenschaften und das Verfahren zu ihrer Herstellung mit den Merkmalen der unabhängigen Patentansprüche gelöst. Vorteilhafter Ausgestaltungen der Erfindung sind durch die Merkmale der Unteransprüche gegeben.

### Ausführliche Beschreibung der Erfindung

Die Erfindung betrifft eine transparente, einbruchhemmende Brandschutzverglasung mit Antipanik-Eigenschaften.

Unter dem Begriff "Brandschutzverglasungen" werden im allgemeinen Bauteile verstanden, die aus einem oder mehreren lichtdurchlässigen Systemen bestehen, die mit Halterungen und Dichtungen in einen Rahmen eingebaut sind. Hinsichtlich ihrer Feuerwiderstandsklassen unterscheidet man EI- und E-Verglasungen. Derartige Verglasungen werden zusätzlich durch die Angabe ihrer Feuerwiderstandsdauer in Minuten charakterisiert (z.B. EI 30, EI 90, E 30, EI 120). E-Verglasungen verhindern für die entsprechende Zeit nur die Ausbreitung von Feuer und Rauch. El-Verglasungen müssen zusätzlich den Durchtritt der Wärmestrahlung verhindern.

Die erfindungsgemäße transparente Verglasung weist bevorzugt eine Transmission im sichtbaren Spektralbereich von mindestens 20 % auf, besonders bevorzugt mindestens 50 %. Eine transparente Verglasung oder ein transparenter Bestandteil einer Verglasung kann eine Transmission im sichtbaren Spektralbereich > 70% aufweisen.

Einbruchhemmend im Sinne der Erfindung sind Brandschutzverglasungen, wenn sie gegenüber Durchbruch und Durchwurf sicher sind (vgl. DIN 1627 ff.). Je nach Schutzwirkung werden sie in fünf verschiedenen Widerstandsklassen mit steigender Schutzwirkung eingeteilt (EH01, EH02, EH1, EH2, EH3).

Unter einer Anti-Panik-Verglasung wird im Sinne der Erfindung eine Glastür verstanden, welche sich jederzeit in eine Richtung einfach öffnen lässt. Meist weisen die Glastüren hierzu einen Öffnungshebel auf, der sich gut zugänglich über die gesamte Breite der Glastür erstreckt und durch Druck betätigt wird. Der Öffnungshebel ist typischerweise zum Innenraum hin angeordnet, so dass sich die Tür nach außen öffnen lässt. Tritt im Innenraum eine Panik auf, beispielsweise durch flüchtenden Menschenmassen, so kann die Tür jederzeit einfach geöffnet werden, um einen Fluchtweg zu eröffnen. Hinsichtlich der Einbruchssicherheit können solche Anti-Panik-Verglasungen jedoch nachteilig sein, da es genügt, die Verglasung mit einem relativ kleinen Durchbruch (Loch) zu versehen, um den Öffnungshebel von außen betätigen zu können. Anti-Panik-Verglasungen sollten daher einbruchshemmende Eigenschaften aufweisen, um den Aufwand zur Erzeugung eines solchen Durchbruchs zu erhöhen.

Die transparente, einbruchhemmende Brandschutzverglasung umfasst mindestens einen, insbesondere einen mittig angeordneten, einbruchhemmenden Verbund. Der mittig angeordnete Verbund umfasst mindestens eine transparente Kunststoffscheibe. Unter einer Kunststoffscheibe wird eine starre Scheibe verstanden, im Unterschied etwa zu einer flexiblen Kunststofffolie. In einer bevorzugten Ausgestaltung umfasst der einbruchshemmende Verbund mindestens zwei transparente Kunststoffscheiben, die mithilfe einer haftvermittelnden Schicht haftfest verbunden sind. Die Dicke der Kunststoffscheiben beträgt bevorzugt von 1 mm bis 15 mm, besonders bevorzugt von 6 mm bis 12 mm, womit die Gesamtdicke der gegebenenfalls mehreren Kunststoffscheiben gemeint ist.

Als Kunststoffe können transparente, schlagfeste technische Kunststoffe mit Glastemperaturen über 100 °C und Schmelztemperaturen über 100 °C, vorzugsweise über 200 °C, eingesetzt werden. Erfindungsgemäß werden Polycarbonat oder Polymethylmethacrylat verwendet.

Die Dicke des einbruchshemmenden Verbundes beträgt bevorzugt mindestens 1 mm, besonders bevorzugt mindestens 2mm. Die Dicke des einbruchshemmenden Verbundes beträgt in einer vorteilhaften Ausgestaltung von 1 mm bis 15 mm, bevorzugt von 2 mm bis 15 mm, bevorzugt von 6 mm bis 12 mm. Eine große Dicke der Kunststoffscheiben verbessert insbesondere die einbruchshemmende Wirkung der Verglasung. Für Anti-Panik-Verglasungen beträgt die Dicke des einbruchshemmenden Verbundes vorteilhafterweise mindestens 8 mm, beispielsweise von 8 mm bis 15 mm oder von 8 mm bis 12 mm.

Der haftvermittelnden Schichten können Kleberschichten oder Folien sein. Vorzugsweise werden Folien aus Kunststoff verwendet. Vorzugsweise werden die Folien aus einem Kunststoff, ausgewählt aus der Gruppe, bestehend aus Polyvinylbutyral (PVB), Ethylenvinylacetat (EVA), Polyurethan (PU), Polypropylen (PP), Polyacrylat, Polyethylen (PE), Polycarbonat (PC), Polymethylmethacrylat (PMMA), Polyvinylchlorid (PVC), Polyacetatharz, Gießharzen, Polyacrylaten, fluorierten Ethylen-Propylen-Copolymerisaten, Polyvinylfluorid und/oder Ethylen-Tetrafluorethylen-Copolymerisaten, hergestellt. Insbesondere werden Polyvinylbutyral (PVB) oder Polyurethan (PU) verwendet. Die haftvermittelnde Schicht im Sinne der Erfindung ist insbesondere keine intumineszierende Schicht, sondern dient allein der Verbindung zweier Scheiben.

Die Dicke der haftvermittelnden Schichten beträgt bevorzugt von 0,3 mm bis 5 mm, besonders bevorzugt von 0,76 mm bis 2,5 mm.

In einer Ausgestaltung der Erfindung umfasst der einbruchshemmende Verbund mindestens zwei Kunststoffscheiben und mindestens eine Glasscheibe. Dadurch wird die einbruchshemmende Wirkung weiter erhöht. Die Glasscheibe ist zwischen den beiden Kunststoffscheiben angeordnet und beispielsweise über haftvermittelnde Schichten mit diesen verbunden. Dadurch wird die Stabilität des einbruchshemmenden Verbundes weiter erhöht. Die Glasscheibe kann thermisch oder chemisch vorgespannt sein, um die Bruchfestigkeit weiter zu erhöhen. Es kann auch eine Verbundscheibe zwischen den Kunststoffscheiben angeordnet sein, also mindestens zwei über eine thermoplastische Zwischenschicht miteinander verbundene Glasscheiben.

Die einbruchhemmende Brandschutzverglasung umfasst des Weiteren mindestens zwei, insbesondere zwei beidseitig des mittig angeordneten, einbruchhemmenden Verbundes angeordnete Brandschutzeinheiten. Die Brandschutzeinheiten weisen vorzugsweise jeweils eine Außenfläche auf, die die Brandschutzverglasung begrenzen.

Der einbruchshemmende Verbund wirkt sich aufgrund seines hohen Kunststoffanteils negativ auf das Brandverhalten der Verglasung aus (hohe Brandlast). Durch die beidseitig angeordneten Brandschutzeinheiten wird der einbruchshemmende Verbund im Brandfall geschützt, so dass er nicht oder nur stark verzögert in Brand geraten kann. Das ist der große Vorteil der vorliegenden Erfindung.

Jede Brandschutzeinheit umfasst mindestens zwei, insbesondere drei, mithilfe einer transparenten, intumeszierenden Schicht haftfest verbundene Glasscheiben. Dabei können die Brandschutzeinheiten jeweils die gleiche Anzahl oder unterschiedliche Anzahlen an Glasscheiben aufweisen. Vorzugsweise haben sie die gleiche Anzahl an Glasscheiben.

In einer vorteilhaften Ausgestaltung ist zwischen mindestens einer der Brandschutzeinheiten und dem einbruchshemmenden Verbund eine weitere Glasscheibe angeordnet, bevorzugt zwischen jeder Brandschutzeinheit und dem einbruchshemmenden Verbund. Die Verbindung erfolgt bevorzugt wiederum über haftvermittelnde Schichten. Anders ausgedrückt sind die Brandschutzeinheiten über jeweils mindestens eine, insbesondere eine weitere Glasscheibe mit jeweils einer Seitenfläche des mittig angeordneten, einbruchhemmenden Verbundes mittels mindestens einer, insbesondere einer, der vorstehend beschriebenen haftvermittelnden Schichten verbunden. Ebenso sind die Glasscheiben mittels mindestens einer, insbesondere einer, haftvermittelnden Schicht mit dem einbruchhemmenden Verbund haftfest verbunden. Der mittig angeordnete, einbruchhemmende Verbund ist dabei auf seinen beiden gegenüberliegenden Flächen mithilfe jeweils mindestens einer haftvermittelnden Schicht mit den zwei weiteren Glasscheiben verbunden. Eine der einander gegenüberliegenden weiteren Glasscheiben ist mithilfe mindestens einer haftvermittelnden Schicht mit der ersten Brandschutzeinheit mit der ersten Außenseite und die andere der einander gegenüberliegenden weiteren Glasscheiben mithilfe mindestens einer haftvermittelnden Schicht mit der zweiten Brandschutzeinheit mit der zweiten Außenseite haftfest verbunden. Der Vorteil der weiteren Glasscheiben liegt in der Erhöhung des Glasanteils und damit der Widerstandsfähigkeit der Brandschutzverglasung. Der Glasanteil könnte auch durch eine Vergrößerung der Brandschutzeinheiten um weitere Glasscheiben erreicht werden, was aufgrund der zusätzlichen intumineszierenden Schichten aber kostspieliger ist.

Vorzugsweise sind die Glasscheiben der Brandschutzverglasung und insbesondere der Brandschutzeinheiten aus mindestens einem Glas, ausgewählt aus der Gruppe, bestehend aus Flachglas, Floatglas, Quarzglas Borosilikatglas, Kalknatronglas und Keramikglas aufgebaut. Vorzugsweise sind die Brandschutzeinheiten aus Kalknatronglas aufgebaut.

Die Dicke der Glasscheiben beträgt bevorzugt von 3 mm bis 15 mm, besonders bevorzugt von 3 mm bis 8 mm. Damit ist die Dicke jeder einzelnen Glasscheibe gemeint.

Die transparenten, intumeszierenden Schichten sind aus Alkalisilikaten und/oder aus mit Salz gefüllten wässrigen Acrylpolymeren aufgebaut. Vorzugsweise werden Alkalisilikate, insbesondere Natriumsilikat verwendet. Beispiele geeigneter transparenter, intumeszierender Schichten gehen aus der internationalen Patentanmeldung WO 2007/11887 A1 hervor.

Die Dicke der intumeszierenden Schichten beträgt bevorzugt von 2 mm bis 8 mm, besonders bevorzugt von 3 mm bis 6 mm.

Die Brandschutzverglasung und insbesondere die Brandschutzeinheiten können gegenüber UV-Strahlung stabilisiert sein. Beispiele geeigneter Stabilisatoren sind aus der deutschen Patentanmeldung DE 10 2005 006 748 A1 und der europäischen Patentanmeldung EP 1 398 147 A1 bekannt.

Die Erfindung umfasst außerdem eine Anti-Panik-Tür, enthaltend eine erfindungsgemäße Brandschutzverglasung, bevorzugt in einem Rahmensystem angeordnet, und einen einseitigen Öffnungsmechanismus, der geeignet ist, die Anti-Panik-Tür jederzeit und in jedem Verschlusszustand in eine Richtung zu öffnen, insbesondere einen Öffnungshebel. Der Öffnungsmechanismus ist innenraumseitig zum durch die Tür verschlossenen Raum oder Gebäude angeordnet und die Tür lässt sich typischerweise nach außen öffnen.

Vorzugsweise wird die transparente, einbruchhemmende Brandschutzverglasung durch den Aufbau eines Laminatverbundes durch passgenaues Übereinanderlegen der einzelnen flächenförmigen Scheibenelemente und Einbringen im Sackverfahren in einen Autoklavofen und haftfestes Verbinden der Scheibenelemente bei erhöhter Temperatur und erhöhtem Druck hergestellt (vgl. die deutsche Patentanmeldung DE 10 2010 037 966 A1, Seite 4, Absatz [0021]).

Die transparente, einbruchhemmende Brandschutzverglasung kann in vielfältiger Weise angewendet werden. So kann sie als bewegliches oder fixiertes, funktionales und/oder dekoratives Einzelstück und als Einbauteil in Möbeln, Geräten, Gebäuden und Fortbewegungsmitteln verwendet werden. Insbesondere wird sie dort verwendet, wo eine erhöhte Einbruchsgefahr verbunden mit einer erhöhten Brandgefahr besteht. Beispielsweise wird sie als architektonisches Bauelement (insbesondere als Bestandteil einer Glastür oder einer stationären Verglasung) in Gebäuden, wie Museen, Banken, Flughäfen, Terminals oder Bahnhöfen, wo große Menschenmassen auftreten und/oder Wertsachen, teure Waren, Kunstgegenstände oder gefährliche Güter umgesetzt oder aufbewahrt werden, eingesetzt, besonders bevorzugt als Anti-Panik-Verglasung.

### Kurze Beschreibung der Figuren

Die Erfindung wird nun anhand eines Ausführungsbeispiels und eines Vergleichsbeispiels gemäß dem Stand der Technik näher erläutert. Es zeigen in vereinfachter, in nicht maßstäblicher Darstellung:
- Figur 1: einen vertikalen Längsschnitt durch einen Ausschnitt der transparenten, einbruchhemmenden Brandschutzverglasung und
- Figur 2: einen vertikalen Längsschnitt durch einen Ausschnitt einer transparenten, einbruchhemmenden Brandschutzverglasung gemäß dem Stand der Technik.

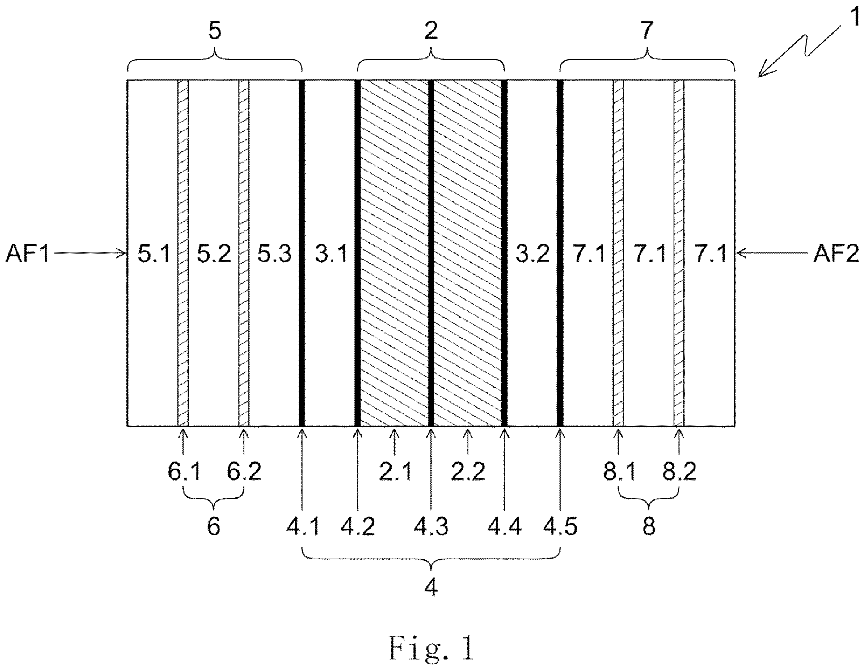

In der Figur 1 haben die Bezugszeichen die folgende Bedeutung:
- 1: transparente, einbruchhemmende Brandschutzverglasung
- 2: mittig angeordneter, transparenter, einbruchhemmender Verbund
- 2.1, 2.2: transparente Kunststoffscheiben des Verbundes 2
- 3.1, 3.2: dem mittig angeordneten Verbund 2 direkt benachbarte Glasscheiben
- 4: transparente haftvermittelnde Schicht
- 4.1, 4.2 4.3, 4.4 4.5: transparente, haftvermittelnde Schichten zwischen 2.1 und 2.2, 2.1 und 3.1, 2.2 und 3.2, 3.1 und 5.3 sowie 3.2 und 7.1
- 5: der Außenfläche AF1 zugewandte Brandschutzeinheit
- 5.1, 5.2, 5.3: Glasscheiben der Brandschutzeinheit 5
- 6: transparente, intumeszierende Schicht
- 6.1, 6.2: transparente, intumeszierende Schichten der Brandschutzeinheit 5
- 7: der Außenfläche AF2 zugewandte Brandschutzeinheit
- 7.1,7.2, 7.3: Glasscheiben der Brandschutzeinheit 7
- 8: transparente, intumeszierende Schicht
- 8.1, 8.2: transparente, intumeszierende Schichten der Brandschutzeinheit 7
- AF1, AF2: einander gegenüberliegende Außenflächen der Brandschutzverglasung 1

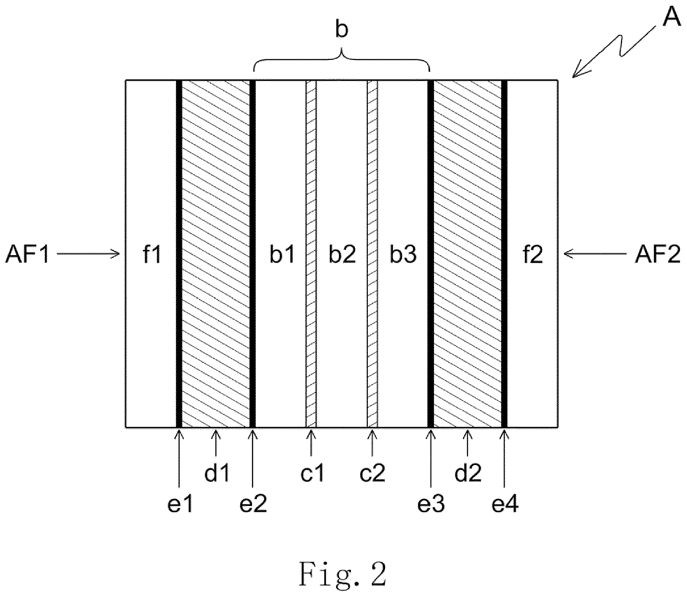

In der Figur 2 haben die Bezugszeichen die folgende Bedeutung:
- A: transparente, einbruchhemmende Brandschutzverglasung
- AF1, AF2: einander gegenüberliegende Außenflächen der Brandschutzverglasung A
- b: mittig angeordnete Brandschutzeinheit
- b1, b2, b3: Glasscheiben der Brandschutzeinheit b
- c1, c2: transparente, intumeszierende Schichten der Brandschutzeinheit b
- d1, d2: transparente Kunststoffscheiben
- e1, e2, e3, e4: haftvermittelnde Schichten
- f1, f2: einander gegenüberliegende äußere Glasscheiben

### Ausführliche Beschreibung der Figuren

### Figur 1

Die Figur 1 zeigt einen vertikalen Längsschnitt aus einem Ausschnitt einer Ausführungsform der erfindungsgemäßen, transparenten, einbruchhemmenden Brandschutzverglasung 1.

Die erfindungsgemäße Brandschutzverglasung 1 wies die Maße 1 m × 1 m. Sie war in einem passenden Stahlrahmen fixiert.

Der mittig angeordnete, transparente, einbruchhemmende Verbund 2 war 3 mm dick und wurde von zwei mithilfe einer Polyurethanfolie 4.3 haftfest verbundenen Polycarbonatscheiben 2.1 und 2.2 gebildet. Die beiden gegenüberliegenden Flächen des Verbundes 2 waren jeweils mittels einer Polyurethanfolie 4.2 und 4.4 mit zwei 4 mm dicken Floatglasscheiben 3.1 und 3.2 verbunden. Die Außenseiten der beiden Floatglasscheiben 3.1 und 3.2 waren jeweils mittels einer Polyurethanfolie 4.1 und 4.5 mit einer Brandschutzeinheit 5 und einer Brandschutzeinheit 7 haftfest verbunden. Beide Brandschutzeinheiten 5 und 7 waren aus jeweils zwei Floatglasscheiben 5.2 und 5.3 und 7.1 und 7.2 sowie einer der Außenseite AF1 zugeordneten Floatglasscheibe 5.1 und einer der Außenseite AF2 zugeordneten Floatglasscheibe 7.3 aufgebaut. Alle Glasscheiben wiesen eine Dicke von 4 mm auf.

Zwischen den Glasscheiben 5.1 und 5.2 sowie 5.2 und 5.3 war jeweils eine 3 mm dicke transparente, intumeszierende Alkalisilikatschicht 6.1 und 6.2 angeordnet. In gleicher Weise war zwischen den Glasscheiben 7.1 und 7.2 sowie 7.2 und 7.3 jeweils eine 3 mm dicke transparente, intumeszierende Alkalisilikatschicht 8.1 und 8.2 angeordnet. Alle transparenten, intumeszierenden Schichten 6 und 8 waren UV-stabilisiert. Beispiele geeigneter UV-Stabilisatoren sind aus der deutschen Patentanmeldung DE 10 2005 006 748 A1 bekannt.

Die erfindungsgemäße transparente, einbruchhemmende Brandschutzverglasung 1 erfüllte die Anforderung EI 120. Sie verhinderte wirksam Einbrüche, da sie - wenn überhaupt - nur ausgesprochen schwer durchstoßen werden konnte.

In einer Weiterbildung kann auch eine weitere, nicht dargestellte Glasscheibe zwischen den Polycarbonatscheiben 2.1 und 2.2 angeordnet sein, wodurch die Stabilität weiter erhöht wird.

### Figur 2

Die Figur 2 zeigt einen vertikalen Längsschnitt aus einem Ausschnitt einer einbruchhemmenden Brandschutzverglasung A des Standes der Technik gemäß der deutschen Patentanmeldung DE 10 2010 037 966 A1.

Die Abmessungen und Materialien der Bauteile der Brandschutzverglasung A waren die gleichen wie bei der Brandschutzverglasung 1 gemäß der Erfindung. Indes war der Aufbau der Brandschutzverglasung A grundlegend verschieden von der Erfindung.

Die Brandschutzverglasung A wies eine mittig angeordnete Brandschutzeinheit b mit drei Glasscheiben b1, b2 und b3, die durch zwei transparente, intumeszierende Schichten c1 und c2 zusammengehalten wurden, auf. Auf den beiden gegenüberliegenden Flächen der Brandschutzeinheit b war jeweils eine Polycarbonatscheibe d1 und d2 mithilfe einer Folie e2 und e3 befestigt. An deren Außenflächen war wiederum jeweils eine Glasscheibe f1 und f2 mithilfe der Folien e1 und e4 befestigt.

Die Brandschutzverglasung A wies zwar eine befriedigende Einbruchshemmung auf, jedoch entsprach wegen der Anordnung der Polycarbonatscheiben d1 und d2 vor der Brandschutzeinheit b der Brandschutz keinen hohen Ansprüchen. Der Grund lag darin, dass, bevor die Brandschutzeinheit b ihre Wirkung entfalten konnte, mindestens eine Polycarbonatscheibe d1 oder d2 abbrannte oder abgebrannt war.

## Patentansprüche

1. Transparente, einbruchhemmende Brandschutzverglasung (1), umfassend
- mindestens einen mittig angeordneten, einbruchhemmenden Verbund (2), welcher mindestens eine transparente Kunststoffscheibe (2.1) umfasst,
- mindestens zwei beidseitig des mittig angeordneten, einbruchhemmenden Verbundes (2) angeordnete Brandschutzeinheiten (5, 7) und
- zwei einander gegenüberliegende Außenflächen (AF1, AF2),
wobei die mindestens eine Kunststoffscheibe (2.1) des einbruchhemmenden Verbundes (2) aus Polycarbonat (PC) oder Polymethylmethacrylat (PMMA) aufgebaut ist.

2. Brandschutzverglasung (1) nach Anspruch 1, wobei die Dicke des einbruchshemmenden Verbundes (2) mindestens 1 mm beträgt, beispielsweise von 1 mm bis 15 mm, bevorzugt mindestens 2 mm, beispielsweise von 2 mm bis 15 mm, besonders bevorzugt von 6 mm bis 12 mm.

3. Brandschutzverglasung (1) nach einem der Ansprüche 1 bis 2, wobei der einbruchhemmende Verbund (2) mindestens zwei Kunststoffscheiben (2.1, 2.2) umfasst, die mithilfe mindestens einer haftvermittelnden Schicht (4.3) verbunden sind.

4. Brandschutzverglasung (1) nach Anspruch 3, wobei zwischen den beiden zwei Kunststoffscheiben (2.1, 2.2) eine Glasscheibe angeordnet ist, die mithilfe haftvermittelnder Schichten (4.3) mit den Kunststoffscheiben (2.1, 2.2) verbunden ist.

5. Brandschutzverglasung (1) nach einem der Ansprüche 1 bis 4, wobei zwischen dem einbruchhemmenden Verbund (2) und den Brandschutzeinheiten (5, 7) jeweils eine Glasscheibe (3.1, 3.2) angeordnet ist, wobei die Glasscheiben (3.1, 3.2) über haftvermittelnde Schichten (4.14.2, 4.4, 4.5) mit dem einbruchshemmenden Verbund (2) und den Brandschutzeinheiten (5, 7) verbunden sind.

6. Brandschutzverglasung (1) nach einem der Ansprüche 4 bis 5, wobei die haftvermittelnden Schichten (4) Folien aus Polyvinylbutyral (PVB) oder Polyurethan (PU) sind.

7. Brandschutzverglasung (1) nach einem der Ansprüche 1 bis 6, wobei die Brandschutzeinheiten (5, 7) jeweils mindestens zwei mithilfe einer transparenten, intumeszierenden Schicht (6, 8) haftfest verbundene Glasscheiben (5.2, 5.3, 7.1, 7.2) umfassen.

8. Brandschutzverglasung (1) nach Anspruch 7, wobei die intumeszierenden Schichten (6, 8) aus Alkalisilikaten und/oder mit Salz gefüllten wässrigen Acrylpolymeren aufgebaut sind.

9. Brandschutzverglasung (1) nach einem der Ansprüche 5 bis 8, wobei die Glasscheiben (3.1, 3.2, 5.2, 5.3, 7.1, 7.2) aus Kalknatronglas aufgebaut sind.

10. Brandschutzverglasung (1) nach einem der Ansprüche 1 bis 9, welche UV-geschützt ist.

11. Anti-Panik-Tür, enthaltend eine Brandschutzverglasung (1) nach einem der Ansprüche 1 bis 10 angeordnet in einem Rahmensystem und einen einseitigen Öffnungsmechanismus, der geeignet ist, die Anti-Panik-Tür jederzeit in eine Richtung zu öffnen.

12. Verfahren zur Herstellung einer transparenten, einbruchhemmenden Brandschutzverglasung (1) nach einem der Ansprüche 1 bis 10 durch Aufbau eines Laminatverbundes durch passgenaues Übereinanderlegen der einzelnen flächenförmigen Scheibenelemente und Einbringen im Sackverfahren in einen Autoklavofen und haftfestes Verbinden der Scheibenelemente bei erhöhter Temperatur und erhöhtem Druck.

13. Verwendung der transparenten, einbruchhemmenden Brandschutzverglasung (1) nach einem der Ansprüche 1 bis 10 als architektonisches Bauelement, insbesondere in Glastüren oder stationären Verglasungen, in Gebäuden, bevorzugt in Museen, Banken, Flughäfen, Terminals oder Bahnhöfen.

14. Verwendung der transparenten, einbruchhemmenden Brandschutzverglasung (1) nach einem der Ansprüche 1 bis 10 als Anti-Panik-Verglasung.

## Claims

1. Transparent, burglary-resistant fire protection glazing (1), comprising
- at least one centrally arranged, burglary-resistant composite (2) that includes at least one transparent plastic pane (2.1),
- at least two fire protection units (5, 7) arranged on both sides of the centrally arranged, burglary-resistant composite (2), and
- two outer surfaces (AF1, AF2) opposite one another,
wherein the at least one plastic pane (2.1) of the burglary-resistant composite (2) is made of polycarbonate (PC) or polymethyl methacrylate (PMMA).

2. Fire protection glazing (1) according to claim 1, wherein the thickness of the burglary-resistant composite (2) is at least 1 mm, for example, from 1 mm to 15 mm, preferably at least 2 mm, for example, from 2 mm to 15 mm, particularly preferably from 6 mm to 12 mm.

3. Fire protection glazing (1) according to one of claims 1 through 2, wherein der burglary-resistant composite (2) includes at least two plastic panes (2.1, 2.2) that are connected by means of at least one adhesion-promoting layer (4.3).

4. Fire protection glazing (1) according to claim 3, wherein a glass pane that is connected to the plastic panes (2.1, 2.2) by means of adhesion-promoting layers (4.3) is arranged between the two plastic panes (2.1, 2.2).

5. Fire protection glazing (1) according to one of claims 1 through 4, wherein a glass pane (3.1, 3.2) is in each case arranged between the burglary-resistant composite (2) and the fire protection units (5, 7), wherein the glass panes (3.1, 3.2) are connected to the burglary-resistant composite (2) and to the fire protection units (5, 7) via adhesion-promoting layers (4.14.2, 4.4, 4.5).

6. Fire protection glazing (1) according to one of claims 4 through 5, wherein the adhesion-promoting layers (4) are films made of polyvinyl butyral (PVB) or polyurethane (PU).

7. Fire protection glazing (1) according to one of claims 1 through 6, wherein the fire protection units (5, 7) include in each case at least two glass panes (5.2, 5.3, 7.1, 7.2) adhesively bonded by means of a transparent, intumescent layer (6, 8).

8. Fire protection glazing (1) according to claim 7, wherein the intumescent layers (6, 8) are made of alkali silicates and/or salt-filled aqueous acrylic polymers.

9. Fire protection glazing (1) according to one of claims 5 through 8, wherein the glass panes (3.1, 3.2, 5.2, 5.3, 7.1, 7.2) are made of soda lime glass.

10. Fire protection glazing (1) according to one of claims 1 through 9, which is UV-protected.

11. Antipanic door, including a fire protection glazing (1) according to one of claims 1 through 10 arranged in a frame system and a one-sided opening mechanism that is suitable for opening the antipanic door at any time in one direction.

12. Method for producing a transparent, burglary-resistant fire protection glazing (1) according to one of claims 1 through 10 by constructing a laminate composite by precisely superimposing the individual planar pane elements and introducing the pane elements into an autoclave furnace and adhesively bonding them at elevated temperature and pressure.

13. Use of the transparent, burglary-resistant fire protection glazing (1) according to one of claims 1 through 10 as an architectural construction element, in particular in glass doors or stationary glazings, in buildings, preferably in museums, banks, airports, terminals, or railway stations.

14. Use of the transparent, burglary-resistant fire protection glazing (1) according to one of claims 1 through 10 as antipanic glazing.

## Revendications

1. Vitrage de protection contre l'incendie (1) transparent et résistant à l'effraction, comprenant
- au moins un composite (2) résistant à l'effraction, disposé au centre, qui comprend au moins une vitre en plastique transparente (2.1),
- au moins deux unités de protection contre l'incendie (5, 7) disposées de part et d'autre du composite (2) résistant à l'effraction disposé au centre, et
- deux surfaces extérieures (AF1, AF2) opposées l'une à l'autre,
dans lequel l'au moins une vitre en plastique (2.1) du composite (2) résistant à l'effraction est en polycarbonate (PC) ou en polyméthacrylate de méthyle (PMMA).

2. Vitrage de protection contre l'incendie (1) selon la revendication 1, dans lequel l'épaisseur du composite (2) résistant à l'effraction est d'au moins 1 mm, par exemple de 1 mm à 15 mm, de préférence d'au moins 2 mm, par exemple de 2 mm à 15 mm, de manière particulièrement préférée de 6 mm à 12 mm.

3. Vitrage de protection contre l'incendie (1) selon l'une des revendications 1 à 2, dans lequel le composite (2) résistant à l'effraction comprend au moins deux vitres en plastique (2.1, 2.2) qui sont reliées au moyen d'au moins une couche d'adhérence (4.3).

4. Vitrage de protection contre l'incendie (1) selon la revendication 3, dans lequel une vitre reliée aux vitres en plastique (2.1, 2.2) au moyen de couches d'adhérence (4.3) est disposée entre les deux vitres en plastique (2.1, 2.2).

5. Vitrage de protection contre l'incendie (1) selon l'une des revendications 1 à 4, dans lequel une vitre (3.1, 3.2) est respectivement disposée entre le composite (2) résistant à l'effraction et les unités de protection contre l'incendie (5, 7), les vitres (3.1, 3.2) étant reliées au composite (2) résistant à l'effraction et aux unités de protection contre l'incendie (5, 7) par l'intermédiaire de couches favorisant l'adhésion (4.14.2, 4.4, 4.5).

6. Vitrage de protection contre l'incendie (1) selon l'une des revendications 4 à 5, dans lequel les couches favorisant l'adhésion (4) sont des films en polyvinylbutyral (PVB) ou en polyuréthane (PU).

7. Vitrage de protection contre l'incendie (1) selon l'une des revendications 1 à 6, dans lequel les unités de protection contre l'incendie (5, 7) comprennent à chaque fois au moins deux vitres (5.2, 5.3, 7.1, 7.2) collées au moyen d'une couche transparente intumescente (6, 8).

8. Vitrage de protection contre l'incendie (1) selon la revendication 7, dans lequel les couches intumescentes (6, 8) sont constituées de silicates alcalins et/ou de polymères acryliques aqueux chargés en sel.

9. Vitrage de protection contre l'incendie (1) selon l'une des revendications 5 à 8, dans lequel les vitres (3.1, 3.2, 5.2, 5.3, 7.1, 7.2) sont en verre sodocalcique.

10. Vitrage de protection contre l'incendie (1) selon l'une des revendications 1 à 9, qui est protégé contre les UV.

11. Porte antipanique, comprenant un vitrage de protection contre l'incendie (1) selon l'une des revendications 1 à 10 disposé dans un système de cadre et un mécanisme d'ouverture unilatéral qui est adapté pour ouvrir la porte antipanique à tout moment dans un sens.

12. Procédé de fabrication d'un vitrage de protection contre l'incendie (1) transparent et résistant à l'effraction selon l'une des revendications 1 à 10, par construction d'un composite stratifié par superposition précise des différents éléments de vitre plans et introduction des éléments de vitre dans un four autoclave et collage à température et pression élevées.

13. Utilisation du vitrage de protection contre l'incendie (1) transparent et résistant à l'effraction selon l'une des revendications 1 à 10 comme élément de construction architectural, en particulier dans des portes vitrées ou des vitrages fixes, dans des bâtiments, de préférence dans des musées, des banques, des aéroports, des terminaux ou des gares.

14. Utilisation du Vitrage de protection contre l'incendie (1) transparent et anti-effraction selon l'une des revendications 1 à 10 comme vitrage antipanique.
